**Europäisches Patentamt**

**European Patent Office**

**Office européen des brevets**

(19)

(11) Publication number: **0 203 894**
**B1**

(12)

# EUROPEAN PATENT SPECIFICATION

(45) Date of publication of the patent specification:
**27.09.89**

(51) Int. Cl.⁴: **B 60 T 13/68,** B 60 T 17/18,
B 60 T 13/38

(21) Application number: **86830107.8**

(22) Date of filing: **05.05.86**

(54) Safety device for pneumatic braking cylinders with parking-brake sections, for railway and tramway vehicles.

(30) Priority: **24.05.85 IT 6748285**

(43) Date of publication of application:
**03.12.86 Bulletin 86/49**

(45) Publication of the grant of the patent:
**27.09.89 Bulletin 89/39**

(84) Designated Contracting States:
**AT BE CH DE FR GB IT LI LU NL SE**

(56) References cited:
**GB-A- 2 145 485**
**US-A- 4 316 640**
**US-A- 4 339 154**

(73) Proprietor: **WABCO WESTINGHOUSE COMPAGNIA FRENI S.p.A., Via Pier Carlo Boggio 20, I-10138 Torino (IT)**

(72) Inventor: **Restori, Ettore, Piazza Bonghi 18,
I-10147 Torino (IT)**

(74) Representative: **Buzzi, Franco et al, c/o Jacobacci-Casetta & Perani S.p.A. Via Alfieri, 17, I-10121 Torino (IT)**

## Description

The present invention relates generally to braking systems for railway and tramway vehicles, particularly for underground trains of the type described in the pre-characterizing part of Claim 1.

In particular, the invention relates to braking systems which use pneumatic cylinders having a service-brake section connected to a pneumatic line and a parking-brake section connected to a pressurised air supply and arranged to operate as a result of the interruption of the connection and the exhaustion of the parking-brake section in order to ensure that the vehicle remains stationary.

In braking systems of this type, communication between the parking-brake section of the cylinder, normally constituted by a simple spring actuator, and its pressurised air supply is controlled by a solenoid valve movable between an energised open position and a de-energised, closed, exhaust position. In practice, therefore, the operation of the parking-brake section is controlled by this solenoid valve independently of the service-brake circuit: consequently, any malfunctions of the solenoid valve or, as occurs more frequently, interruptions of the electrical supply may cause untimely braking with consequent danger, particularly for underground trains in the event of unwanted stoppages in tunnels.

The object of the present invention is to solve this problem by means of a safety device for avoiding untimely braking caused by the operation of the parking-brake section.

In order to achieve this object, the invention provides a safety device characterised in that it includes a cut-off valve interposed between the pressurised air supply and the parking-brake section of the cylinder and arranged to keep their communication open, even in the event of breakdown or electrical interruption, and to allow this communication to be broken, and hence the parking-brake section to operate, only in the event of breakdown or electrical interruption with simultaneous activation of the service-brake section of the cylinder.

Thus, in practice, the device according to the invention allows the parking-brake section to operate only if both the following conditions are satisfied:
– full application of the service brake,
– subsequent electrical command by the conductor.

According to an embodiment of the invention, this cut-off valve includes:
– a two-position directional shuttle valve respectively for opening communication between the pressurised air supply and the parking-brake section of the cylinder and for closing this communication and exhausting the parking-brake section,
– first electro-pneumatic actuator means for keeping the directional valve in the open position in normal conditions of electrical supply and for allowing the directional valve to move into the closed exhaust position in the absence of an electrical supply, and
– second actuator means for controlling the movement of the directional valve into the closed exhaust position in the absence of an electrical supply upon operation of the service brake.

According to an embodiment of the invention, a one-way flow valve is connected between the cut-off valve and the pressurised air supply so as to prevent the parking-brake section from exhausting with the directional valve in the open position in the event of a breakage of the connection between the safety device and the pressurised air supply.

According to an embodiment of the invention, the safety device further includes retaining means for locking the directional valve in the open position, the retaining means being disengageable as a result of the operation of the second actuator means and also acting as stop means for locking the directional valve in the closed exhaust position following its movement into this position.

According to a preferred embodiment of the invention, the first actuator means include a first pneumatic cylinder supplied through a two-position directional solenoid valve having a respective open position corresponding to its normal energised condition, in which it keeps the pneumatic cylinder pressurised, and an exhaust position corresponding to its de-energised condition, in which it exhausts the pneumatic cylinder to allow the movement of the directional valve from the open position to the closed exhaust position, and in that the second actuator means comprise a second pneumatic cylinder disposed on that side of the directional valve opposite the first pneumatic cylinder and having a piston connected to the shuttle of the directional valve, the second pneumatic cylinder being supplied in the braking phase by the service-brake circuit so as to move the piston towards the directional valve to place the shuttle thereof in its closed exhaust position.

Further characteristics of the invention will become apparent from the detailed description which follows with reference to the appended drawings, provided purely by way of non-limiting example, in which:

Figure 1 illustrates schematically a pneumatic braking cylinder for railway and tramway vehicles, provided with a safety device according to the invention,

Figure 2 is a schematic diagram illustrating the safety device, and

Figure 3 is a variant of Figure 2.

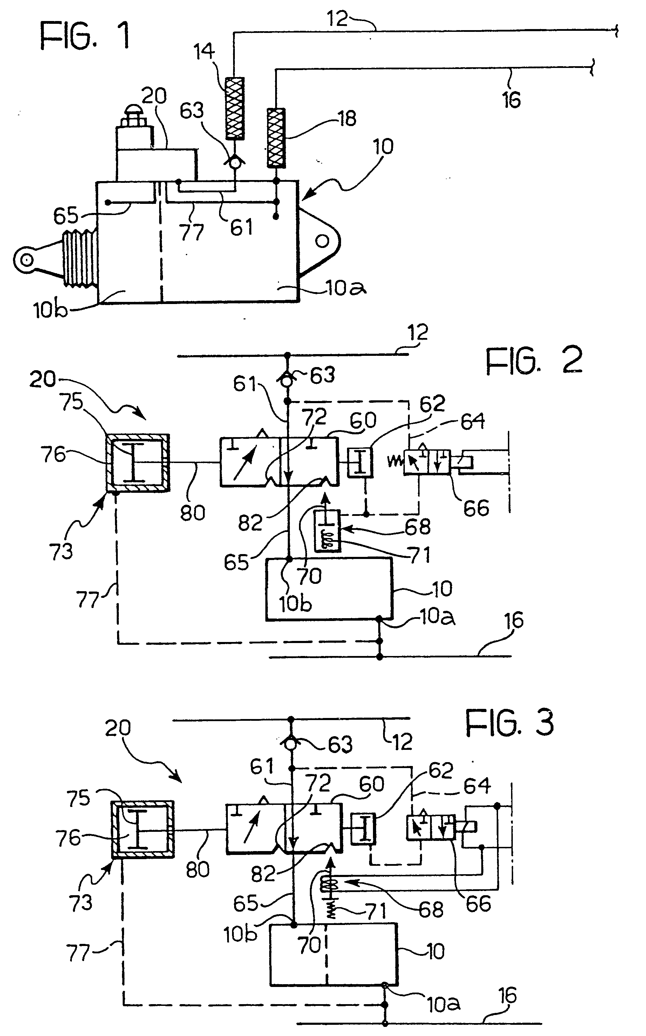

With reference initially to Figure 1, a pneumatic braking cylinder for railway and tramway vehicles is generally and schematically indicated 10. The cylinder 10 is of generally known type and therefore will not be described in detail. For the purpose of the present invention, it suffices to say that it has within it a service-brake section 10a and a parking-brake section 10b normally constituted by a simple actuator held in a rest position against the action of resilient biasing means by pressurised air. The pressurised air is supplied to the parking-brake section 10b through a line 12 connected to the main line of the braking system of the vehicle or an auxiliary reservoir, and including a flexible portion 14.

The service-brake section 10a is connected by a line 16 including a flexible pipe 18 to a pneumatic or electro-pneumatic braking circuit of known type, through a conventional distributor.

According to the invention, a safety device 20 is attached to the outside of the cylinder 10 and is connected between the line 12 (or the flexible pipe 14) and the parking-brake section 10b so as to avoid untimely operation of this section 10b.

As illustrated in greater detail in Figure 2, the safety device includes a two-position, two-way directional valve 60 the input of which is connected through a passage 61 to the line 12 (or the flexible tube 14) through a one-way flow valve 63, and the output of which is connected to the parking-brake section 10b through a passage 65.

The valve 60 is movable from the open position illustrated in Figure 2, in which communication between the pipe 12 and the parking brake section 10b is open, to a closed position in which this communication is closed and the section 10b is exhausted, thus actuating the parking brake.

Under normal operational conditions of the braking circuit, the valve 60 is held in its open position by the action of a pneumatic cylinder 62 the pressure chamber of which is supplied from a duct 64 branching from the passage 61 downstream of the one-way flow valve 63, through a two-position, two-way directional solenoid valve 66. In its energised condition, the solenoid valve 66 is normally in the open position illustrated in Figure 2, so as to keep communication between the tube 12 and the pressure chamber of the pneumatic cylinder 62 open and to retain the valve 60 in its open position. When de-energised, the solenoid valve 66 is moved into its closed position, exhausting the pressure chamber of the pneumatic cylinder 62 and allowing the valve 60 to move into its closed, exhaust position.

An actuator 68 is associated with a latch member 70 movable between a withdrawn rest position and an advanced operative position in which it cooperates with a catch notch 72 of the slide of the valve 60 when the latter is in its closed exhaust position as well as with a catch notch 82 when the slide is in its open position, in the event of a breakdown of the solenoid valve 66, in the manner explained below. The operation of the latch member 70 is obviously that of locking and retaining the valve 60 in its open position or in its closed exhaust position, as will be specified below.

In the case of Figure 2, the actuator 68 is of the pneumatic type and is connected in the manner illustrated to the output of the solenoid valve 66. Hence, when the solenoid valve 66 is in its energised open condition, the latch member 70 is located in its withdrawn rest position against the action of a biasing spring 71. When the solenoid valve 66 is de-energised and is in the closed position, however, the pneumatic actuator 68 is moved into its exhaust position and the spring 71 urges the latch member 70 into its advanced operative position to cooperate with the notch 82 or the notch 72.

In the case of the variant illustrated in Figure 3, however, in which parts indentical or similar to those described above are indicated by the same reference numerals, the actuator 68 is of the electromagnetic type and is connected electrically to the energisation circuit of the solenoid valve 66. The operation of the latch member 70 in this case is exactly the same as that described above.

In order to achieve the movement of the valve 60 from the open position to the closed exhaust position, a pneumatic cylinder 73 is provided and is located on the opposite side of the valve 60 from the pneumatic cylinder 62. A piston 75 is sealingly slidable in the cylinder 73 and defines a pressure chamber 76 on the side opposite the valve 60. This pressure chamber 76 is connected to the pipe 16, and hence to the service-brake circuit, through a passage 77. The piston 75 is fixed to an axial rod 80 connected to the slide of the valve 60. When there is no pressure in the thrust chamber 76 and hence in the pipe 16, the piston 75 is disposed in its withdrawn position illustrated in Figures 2 and 3. When there is pressure in the chamber 76, that is, when the pipe 16 is supplied by the electro-pneumatic service-brake circuit, the piston 75 moves to the right as shown in the drawings, moving the slide of the valve 60 correspondingly with the effects which will be clarified below.

Operation

a) Conditions of movement (vehicle unbraked) The service-brake section 10a of the cylinder is not supplied. The air pressure in the line 12 reaches the parking-brake section 10b of the cylinder through the one-way flow valve 63, the duct 61, the valve 60, and the duct 65, so as to annul the action of the resilient elements of this section.

Simultaneously, the air in the duct 61 reaches the solenoid valve 66 through the duct 64, the solenoid valve 66 being energised and hence allowing the supply of the chamber 62 which keeps the shuttle in the open position and inhibits the action of the escapement 68.

b) Service braking

The duct 16 of the brake supplies the section 10a of the cylinder, applying the service brake.

The pressurised air reaches the chamber 73 of the shuttle valve through the duct 77 without causing its movement in that this is prevented by the greater pressure present in the chamber 62; consequently, the spring section 10b of the cylinder behaves as it does under the conditions of movement.

c) Application of the parking brake

In order to operate the parking brake, it is necessary to act as follows:

- to operate the service brake fully, thus restoring the conditions of point (b),
- to de-energise the solenoid valve 66.

Thus, the duct 64 is cut off and the chamber 62 and the device 68 are exhausted. The shuttle of the valve 60 moves as a result of the thrust exerted by the pressure present in the chamber 73 which is no longer opposed by that in the chamber 62 and this means that the spring section 10b of the cylinder is exhausted to allow the application of the parking brake. Switching having been effected, the escapement 70, under the action of the spring 71, locks the shuttle in its new position to ensure that the parking brake is kept on whether or not the service brake is on.

d) Release of the parking brake

By energising the solenoid valve 66, one restores the conditions of movement in that there are re-supplied the escapement 68 which is released and the chamber 62 which cause the translational movement of the shuttle, even when the service brake is on, since the pressure in the duct 12 is always greater than that in the duct 16. As a result of the translational movement of the shuttle, communication between the pressurised air supply 12 and the section 10b of the cylinder is restored, annulling the action of the resilient members of the parking brake.

Safety
a) Accidental interruption of the electrical supply to the solenoid valve during movement

If the electrical supply to the solenoid valve 66 is interrupted, the chamber 62 is exhausted and the shuttle does not move since the chamber 73 is not supplied in the absence of service braking. Furthermore, the chamber of the escapement 68 is exhausted, allowing the movement of the shuttle to be blocked and ensuring communication between the pressurised duct 12 and the section 10b of the spring cylinder. Any subsequent service braking does not cause movement of the shuttle due to the action of the escapement 68 and the parking brake cannot operate.

b) Breakage of the flexible pipe 14 (Figure 1)

Should the flexible pipe 14 break, the one-way flow valve 63 prevents exhaustion of the pressure in the section 10b of the cylinder and thus prevents the parking brake from operating.

Naturally the constructional details and forms of embodiment may be varied widely with respect to that described and illustrated, without thereby departing from the scope of the present invention.

**Claims**

1. Safety device for pneumatic braking cylinders (10) for railway and tramway vehicles, particularly underground trains, having a service-brake section (10a) connected to a pneumatic or electro-pneumatic service-brake circuit and a parking-brake section (10b) connected to a pressurised air supply (12) and arranged to operate as a result of the interruption of this connection and the exhaustion of the parking-brake section (10b), characterised in that it includes a cut-off valve (20) interposed between the pressurised air supply (12) and the parking-brake section (10b) of the cylinder (10) and arranged to keep their communication open, even in the event of breakdown or electrical interruption, and to allow this communication to be broken, and hence the parking brake-section (10b) to operate, only in the event of breakdown or electrical interruption with simultaneous activation of the service-brake section (10a) of the cylinder.

2. Device according to Claim 1, characterised in that a one-way flow valve (63) is interposed between the pressurised air supply (12) and the cut-off valve (20) and is arranged to prevent the exhaustion of the parking-brake section (10b) with the cut-off valve (20) in the open position in event of breakage of the connection between this cut-off valve (20) and the pressurised air supply (12).

3. Device according to Claim 1 or Claim 2, characterised in that the cut-off valve (20) includes:
- a two-position directional shuttle valve (60) respectively for opening communication between the pressurised air supply (12) and the parking-brake section (10b) of the cylinder (10) and for closing this communication and exhausting the parking-brake section (10b),
- first electro-pneumatic actuator means (62, 66) for keeping the directional valve (60) in the open position in the normal conditions of electrical supply and for allowing the directional valve (60) to move into the closed exhaust position in the absence of an electrical supply, and
- second actuator means (73) for controlling the movement of the directional valve (60) into the closed exhaust position in the absence of an electrical supply upon operation of the service brake.

4. Device according to Claim 3, characterised in that the second actuator means (73) are piloted by the pressure in the service-brake circuit (16).

5. Device according to Claim 3 or Claim 4, characterised in that it further includes retaining means (70, 82) for locking the directional valve (60) in the open position, the retaining means (70, 82) being disengageable as a result of the operation of the second actuator means (73).

6. Device according to Claim 5, characterised in that the retaining means also act as stop means (70, 72) for holding the directional valve (60) in the closed exhaust position following its movement into this position.

7. Device according to any one of Claims 3 to 6, characterised in that the first actuator means include a first pneumatic cylinder (62) supplied through a two-position directional solenoid valve (66) having a respective open position corresponding to its normal energised condition, in which it keeps the pneumatic cylinder (62) pressurised, and a discharge position corresponding to its de-energised condition, in which it exhausts the pneumatic cylinder (62) to allow the movement of the directional valve (60) from the open position to the closed exhaust position, and in that the second actuator means comprise a second pneumatic cylinder (73) disposed on that side of the directional valve (60) opposite the first pneumatic cylinder (62) and having a piston (75) connected to the shuttle of the directional valve (60), the second pneumatic cylinder (73) being supplied by the service brake circuit so as to move the piston (74) towards the directional valve (60) to place the shuttle thereof in its closed exhaust position.

8. Device according to Claims 5 and 6, characterised in that the stop means include a latch member (70) movable between a rest position and an operative position to cooperate with complementary catch means (82, 72) of the directional valve (60), the latch member (70) being operated by means of an actuator (68) operatively associated with the directional solenoid valve (66) so that, in the energised condition and the de-energised condition of the latter, there is a corresponding rest position and operative position of the latch member (70), respectively.

9. Device according to Claim 8, characterised in that the actuator (68) is of the pneumatic type and is supplied through the directional solenoid valve (66).

10. Device according to Claim 8, characterised in that the actuator (68) is of the electromagnetic type and is connected electrically to the directional solenoid valve (66).

**Patentansprüche**

1. Sicherheitsvorrichtung für Luftdruckbremszylinder (10) für Eisenbahn- und Straßenbahnfahrzeuge, insbesondere für U-Bahn-Züge, mit einem Betriebsbremsabschnitt (10a), der mit einem pneumatischen oder elektropneumatischen Betriebsbremskreis verbunden ist, und einem Feststellbremsabschnitt (10b), der mit einer Druckluftversorgung (12) verbunden und so angeordnet ist, daß er bei der Unterbrechung dieser Verbindung und Entleerung des Feststellbremsabschnitts (10b) wirksam wird, dadurch gekennzeichnet, daß ein Sperrventil (20) vorgesehen ist, das zwischen der Druckluftversorgung (12) und dem Feststellbremsabschnitt (10b) des Zylinders (10) eingefügt und so angeordnet ist, daß es die Verbindung zwischen diesen Teilen selbst bei Ausfall oder elektrischer Unterbrechung geöffnet hält und eine Unterbrechung dieser Verbindung und damit ein Wirksamwerden des Feststellbremsabschnitts (10b) nur im Fall eines Ausfalls oder einer elektrischen Unterbrechung mit gleichzeitiger Aktivierung des Betriebsbremsabschnitts (10a) zuläßt.

2. Vorrichtung nach Anspruch 1, dadurch gekennzeichnet, daß zwischen der Druckluftversorgung (12) und dem Sperrventil (20) ein Rückschlagventil (63) vorgesehen ist, das so angeordnet ist, daß es die Entleerung des Feststellbremsabschnitts (10b) verhindert, wenn das Sperrventil (20) sich in Öffnungsstellung befindet, und wenn die Verbindung zwischen diesem Sperrventil (20) und der Druckluftversorgung (12) unterbrochen ist.

3. Vorrichtung nach Anspruch 1 oder 2, dadurch gekennzeichnet, daß das Sperrventil (20) folgende Teile aufweist:
- ein richtungsabhängiges Zweipositions-Sperrventil (60) zum Öffnen der Verbindung zwischen der Druckluftversorgung (12) und dem Feststellbremsabschnitt (10b) des Zylinders (10) bzw. zum Schließen dieser Verbindung und zum Entleeren des Feststellbremsabschnitts (10b),
- erste elektropneumatische Betätigungsmittel (62, 66), die das richtungsabhängige Ventil (60) im normalen Betriebszustand der elektrischen Versorgung in Öffnungsstellung halten und ihm bei Fehlen einer elektrischen Versorgung die Bewegung in die geschlossene Entleerungsstellung ermöglichen,
- sowie zweite Betätigungsmittel (73) zur Steuerung der Bewegung des richtungsabhängigen Ventils (60) in die Entleerungsstellung, wenn keine elektrische Versorgung vorhanden ist und die Betriebsbremse betätigt wird.

4. Vorrichtung nach Anspruch 3, dadurch gekennzeichnet, daß die zweiten Betätigungsmittel (73) durch den Druck in dem Betriebsbremskreis (16) gesteuert werden.

5. Vorrichtung nach Anspruch 3 oder 4, dadurch gekennzeichnet, daß ferner Haltemittel (70, 82) vorgesehen sind, die das richtungsabhängige Ventil (60) in Öffnungsstellung blockieren und die durch Betätigung der zweiten Betätigungsmittel (73) auslösbar sind.

6. Vorrichtung nach Anspruch 5, dadurch gekennzeichnet, daß die Haltemittel außerdem als Anschlagmittel (70, 72) dienen, die das richtungsabhängige Ventil (60) nach seiner Bewegung in die geschlossene Entleerungsstellung in dieser Stellung halten.

7. Vorrichtung nach einem der Ansprüche 3 bis 6, dadurch gekennzeichnet, daß die ersten Betätigungsmittel einen Druckluftzylinder (62) aufweisen, der über ein richtungsabhängiges Magnetventil (66) versorgt wird, das zwei Stellungen hat, nämlich eine dem normalen Erregungszustand entsprechende Öffnungsstellung, in der es den Druckluftzylinder (62) unter Druck hält, sowie eine dem unerregten Zustand entsprechende Entladungsstellung, in der es den Druckluftzylinder (62) entleert, so daß das richtungsabhängige Ventil (60) aus der Öffnungsstellung in die geschlossene Entleerungsstellung bewegt wird, und daß die zweiten Betätigungsmittel einen zweiten Druckluftzylinder (73) aufweisen, der auf der dem ersten Druckluftzylinder (62) entgegengesetzten Seite des richtungsabhängigen Ventils (60) angeordnet ist und einen Kolben (75) besitzt, der mit dem Schieber des richtungsabhängigen Ventils (60) verbunden ist, wobei der zweite Druckluftzylinder (73) von dem Betriebsbremskreis so beaufschlagt wird, daß er den Kolben (75) in Richtung auf das richtungsabhängige Ventil (60) bewegt und dadurch dessen Schieber in eine geschlossene Entleerungsstellung bringt.

8. Vorrichtung nach Anspruch 5 und 6, dadurch gekennzeichnet, daß die Anschlagmittel ein Verriegelungsglied (70) aufweisen, das zwischen einer Ruhestellung und einer Arbeitsstellung bewegbar ist und mit komplementären Blockiermitteln (82, 72) des richtungsabhängigen Ventils (60) zusammenwirkt, wobei das Verriegelungsglied (70) durch ein Betätigungsmittel (68) betätigbar ist, das wirkungsmäßig dem richtungsabhängigen Magnetventil (66) so zugeordnet ist, daß das Verriegelungsglied (70) im Erregungszustand bzw. aberregten Zustand des Magnetventils (66) eine entsprechende Ruhestellung bzw. Arbeitsstellung einnimmt.

9. Vorrichtung nach Anspruch 8, dadurch gekennzeichnet, daß die Betätigungsmittel (68) ein Druckluftelement ist und über das richtungsabhängige Magnetventil (66) versorgt.

10. Vorrichtung nach Anspruch 8, dadurch gekennzeichnet, daß das Betätigungsmittel (68) ein elektromagnetisches Element ist, das elektrisch mit dem richtungsabhängigen Magnetventil (66) verbunden ist.

## Revendications

1. Dispositif de sécurité pour cylindres de frein pneumatique (10), pour véhicules ferroviaires et pour tramways, en particulier pour chemins de fer souterrains, comportant une section de frein de service (10a) reliée à un circuit pneumatique ou électro-pneumatique de frein de service et une section de frein de garage (10b) reliée à une alimentation d'air sous pression (12) et conçue pour fonctionner par suite de l'interruption de cette liaison et du vidage de la section de frein de garage (10b), caractérisé en ce qu'il comporte une vanne d'arrêt (20) interposée entre l'alimentation en air comprimé (12) et la section de frein de garage (10b) du cylindre (10) et conçue pour maintenir ouverte la communication entre elles, même dans le cas de panne ou d'interruption électrique, et pour ne permettre la coupure de cette communication, et par conséquent le fonctionnement de la section de frein de garage (10b), que dans le cas de panne ou d'interruption électrique avec activation simultanée de la section de frein de service (10a) du cylindre.

2. Dispositif selon la revendication 1, caractérisé en ce qu'un clapet antiretour (63) est interposé entre l'alimentation en air comprimé (12) et la vanne d'arrêt (20); et en ce qu'il est disposé pour éviter le vidage de la section de frein de garage (10b), la vanne d'arrêt (20) se trouvant en position ouverte, en cas de rupture de la liaison entre cette vanne d'arrêt (20) et l'alimentation en air comprimé (12).

3. Dispositif selon la revendication 1 ou la revendication 2, caractérisé en ce que la vanne d'arrêt (20) comporte:
– une vanne directionnelle à tiroir à deux positions (60), respectivement, pour ouvrir la communication entre l'alimentation en air comprimé (12) et la section de frein de garage (10b) du cylindre (10) et pour fermer cette communication et vider la section de frein de garage (10b),
– des premiers moyens (62, 66) formant actionneurs électro-pneumatiques pour maintenir la vanne directionnelle (60) en position ouverte dans les conditions normales d'alimentation électrique et pour permettre à la vanne directionnelle (60) de se déplacer pour venir dans la position fermée, correspondant au vidage, en l'absence d'une alimentation électrique, et
– des seconds moyens (73) formant actionneur pour commander le mouvement de la vanne directionnelle (60) pour venir dans la position fermée, correspondant au vidage, en l'absence d'une alimentation électrique, lors du fonctionnement du frein de service.

4. Dispositif selon la revendication 3, caractérisé en ce que les seconds moyens (73) formant actionneur sont pilotés par la pression régnant dans le circuit du frein de service (16).

5. Dispositif selon la revendication 3 ou la revendication 4, caractérisé en ce qu'il comporte en outre des moyens de retenue (70, 82) pour verrouiller la vanne directionnelle (60) en position ouverte, les moyens de retenue (70, 82) pouvant se désengager par suite du fonctionnement des seconds moyens (73) formant actionneur.

6. Dispositif selon la revendication 5, caractérisé en ce que les moyens de retenue agissent également comme moyens de butée (70, 72) pour maintenir la vanne directionnelle (60) dans la position fermée, correspondant au vidage, à la suite de son mouvement dans cette position.

7. Dispositif selon l'une quelconque des revendications 3 à 6, caractérisé en ce que les premiers moyens formant actionneur comportent en premier cylindre pneumatique (62) alimenté par l'intermédiaire d'une électrovanne directionnelle à deux positions (66) présentant une position respective ouverte qui correspond à sa condition normale sous tension et dans laquelle elle maintient le cylindre pneumatique (62) sous pression, et une position de vidage qui correspond à sa condition hors tension et dans laquelle elle vide le cylindre pneumatique (62) pour permettre le mouvement de la vanne directionnelle (60), depuis la position ouverte, vers la position fermée correspondant au vidage; et en ce que les seconds moyens formant actionneur comportent un second cylindre pneumatique (73) disposé du côté de la vanne directionnelle (60) opposé au premier cylindre pneumatique (62) et présentant un piston (75) relié au tiroir de la vanne directionnelle (60), le second cylindre pneumatique (73) étant alimenté par le circuit du frein de service de façon à déplacer le piston (75) en direction de la vanne directionnelle (60) pour placer son tiroir dans sa position fermée correspondant au vidage.

8. Dispositif selon les revendications 5 et 6, caractérisé en ce que les moyens de butée comportent un organe de verrouillage (70) qui peut se déplacer entre une position de repos et une position opérationnelle pour collaborer avec des moyens de prise complémentaires (82, 72) de la vanne directionnelle (60), l'organe de verrouillage (70) étant manœuvré au moyen d'un actionneur (68) opérationnellement associé à l'électrovanne directionnelle (66) de façon que, dans la condition sous tension et dans la condition hors tension de cette dernière, il y ait une position correspondante de repos et une position correspondante opérationnelle de l'organe de verrouillage (70), respectivement.

9. Dispositif selon la revendication 8, caractérisé en ce que l'actionneur (68) est du type pneumatique et en ce qu'il est alimenté par l'intermédiaire de l'électrovanne directionnelle (66).

10. Dispositif selon la revendication 8, caractérisé en ce que l'actionneur (68) est du type électromagnétique; et en ce qu'il est relié électriquement à l'électrovanne directionnelle (66).

FIG. 1

FIG. 2

FIG. 3